# EUROPÄISCHE PATENTSCHRIFT

(11) **EP 1 699 295 B1**
(45) Veröffentlichungstag und Bekanntmachung des Hinweises auf die Patenterteilung: **13.01.2010**
(21) Anmeldenummer: 04739857.3
(22) Anmeldetag: 14.06.2004
(51) Int. Cl.: A23D 9/00, A23L 1/32, A23J 7/00

(54) **NEUARTIGE FETTPULVER**
NOVEL FAT POWDERS
NOUVELLES POUDRES GRASSES

(30) Priorität: 30.12.2003 DE 10361667
(43) Veröffentlichungstag der Anmeldung: 13.09.2006
(73) Patentinhaber: Omega for Life Gmbh, 55234 Wendelsheim (DE)
(72) Erfinder: SCHNEIDER, Michael, 67251 Freinsheim (DE); TOVAR, Karlheinz, 55234 Erbes-Büdesheim (DE); KOHN, Gerhard, 55286 Wörrstadt (DE)
(74) Vertreter: Beyer, Andreas
(86) Internationale Anmeldenummer: PCT/EP2004/006373
(87) Internationale Veröffentlichungsnummer: WO 2005/065460

(56) Entgegenhaltungen:
- EP-A- 0 775 449
- EP-A- 1 068 806
- WO-A-93/21912
- WO-A-02/080703
- ZHI-BIN HUANG ET AL: "EFFECT OF DIETARY FISH OIL ON -3 FATTY ACID LEVELS IN CHICKEN EGGSAND THIGH FLESH" JOURNAL OF AGRICULTURAL AND FOOD CHEMISTRY, AMERICAN CHEMICAL SOCIETY. WASHINGTON, US, vol. 38, no. 3, 1 March 1990 (1990-03-01), pages 743-747, XP000102235 ISSN: 0021-8561

## Beschreibung

Die vorliegende Erfindung betrifft ein festes Fettprodukt auf Vollei- oder Eigelbbasis mit einem Fett- oder Ölanteil, der aus dem Vollei oder Eigelb stammende Phospholipide enthält, wobei im Fett- oder Ölanteil langkettige mehrfach ungesättigte Fettsäuren mit mindestens 20 Kohlenstoffatomen in einer Menge von mehr als 5 Gew.-% des Gesamtfettsäuregehaltes vorliegen. Ferner betrifft die vorliegende Erfindung ein Verfahren zur Herstellung des erfindungsgemäßen Fettprodukts.

Tlerische und pflanzliche Fette der menschlichen und tierischen Ernährung bestehen aus einer Vielzahl unterschiedlicher Fettsäuren. Zahlreiche Untersuchungen haben gezeigt, dass innerhalb der Vielzahl unterschiedlicher Fettsäuren einige wenige besondere physiologische Bedeutung für den Stoffwechsel haben, während die anderen in erster Linie der Energiegewinnung und als Depotfett dienen.

Zu den physiologisch bedeutsamen, bioaktiven Fettsäuren gehören die sogenannten langkettigen mehrfach ungesättigten Fettsäuren des Omega-3 und Omega-6-Typs (long chain polyunsaturated fatty acids, LCPUFA, mit 20 oder mehr Kohlenstoffatomen). Die prominentesten Vertreter dieser Fettsäureklasse sind Arachidonsäure (ARA; 20-4ω6); Eicosapentaensäure (EPA; 20-5ω3); Docosahexaensäure (DHA; 22-6ω3) und Docosapentaensäure (DPA, 22-5ω3). Weitere wichtige bioaktive Fettsäuren sind spezielle C18-Fettsäuren, insbesondere γ-Linolensäure (GLA; 18-3ω6), Stearidonsäure (SDA, 18-4ω3) und konjugierte Linolsäuren (CLA).

Öle und Fette mit hohen Gehalten an physiologisch wertvollen, bioaktiven Fettsäuren, insbesondere den langkettigen mehrfach ungesättigten Omega-3 Fettsäuren (wie z.B. aus Fischölen etc), sind chemisch relativ instabil und neigen bereits unter milden Bedingungen zur Oxidation. Dies führt dazu, dass die Einarbeitung dieser Öle und Fette in industriell hergestellte Lebensmittel eine spezielle Verarbeitung erforderlich macht bzw. den Zusatz von natürlichen und/oder synthetischen Antioxidantien erfordert.

Um Öle und Fette mit hohen Gehalten an physiologisch wertvollen, bioaktiven Fettsäuren in Lebensmittel einarbeiten zu können, werden diese heutzutage in speziellen Verfahren mikroverkapselt. Dies erleichtert nicht nur die Verarbeitungsfähigkeit der Öle und Fette, sondern führt auch zu einer verbesserten chemischen Stabilität und gewährleistet hierdurch eine höhere Haltbarkeit der hergestellten Produkte.

Nachteil der mikroverkapselten Öle und Fette ist der durch den Einsatz kostspieliger Produktionstechnologien bedingte hohe Preis. Ein weiterer Nachteil liegt in der Beschränkung auf mikroverkapselte Produkte mit etwa 25 bis 30 Gew.-% Fettanteil in der Trockenmasse der Fettpulver. Weiterhin weisen die bisher verfügbaren mikroverkapselten Öle und Fette Nachteile hinsichtlich der physiologischen Wertigkeit und Akzeptanz der Verkapselungsmaterialien (wie zum Beispiel Gelatine und andere Proteine) sowie hinsichtlich der Absorption und Bioverfügbarkeit der verkapselten Öle und Fette auf.

Aus der EP 1 068 806 A1 ist ein pulverförmiges Produkt und ein Verfahren zu seiner Herstellung bekannt, bei dem Eigelbpartikel zunächst entfettet werden und dann ein funktionelles Nahrungsmaterial in Poren der entfetteten Eigelbpartikel imprägniert wird. Bei dem funktionellen Nahrungsmaterial kann es sich um langkettige mehrfach ungesättigte Fettsäuren, wie Docosahexaensäure, Eicosapentaensäure, Arachidonsäure oder Mischungen davon handeln.

Aufgabe der vorliegenden Erfindung ist es, ein stabilisiertes Fettprodukt bereitzustellen, das die Mikroverkapselungstechnik vermeidet und das einfach und kostengünstig hergestellt werden kann. Das Fettprodukt soll ferner auch einen Fettanteil von mehr als 30 Gew.-%, bezogen auf die Trockenmasse, enthalten können.

Diese Aufgabe wird erfindungsgemäß dadurch gelöst, dass ein festes Fettprodukt auf Vollei- oder Eigelbbasis gemäß Patentanspruch 1 und ein Verfahren zu seiner Herstellung gemäß Patentanspruch 8 bereitgestellt wird. Bevorzugte Ausführungsformen ergeben sich aus den Unteransprüchen.

Dabei wurde überraschend gefunden, dass das erfindungsgemäße Fettprodukt eine hohe Oxidationsstabilität und Bioverfügbarkeit der bioaktiven, langkettigen mehrfach ungesättigten Fettsäuren aufweist. Die chemische Stabilität dieser Fettprodukte übertrifft die Stabilität der nach dem Stand der Technik hergestellten, mikroverkapselten Öle und Fette. Außerdem konnte festgestellt werden, dass die bioaktiven Fettsäuren auf Ei- bzw. Eigelbbasis eine höhere Absorptionsrate und Bioverfügbarkeit aufweisen, als dies bei den reinen Ölen der entsprechenden Fettsäuren der Fall ist. Dies ist u.a. auf den hohen Anteil an Phospholipiden und hier in erster Linie an Phosphatidylcholin zurückzuführen. Weiterhin enthalten die erfindungsgemäßen Fettprodukte in Form der Eigelbproteine einen wesentlichen Anteil an physiologisch sehr hochwertigen Proteinen und nur einen sehr geringen Cholesteringehalt.

Ferner können die erfindungsgemäßen Fettprodukte aufgrund des preiswerten Produktionsverfahrens, das auch großtechnisch durchgeführt werden kann, kostengünstig hergestellt werden.

Ein weiterer Vorteil der vorliegende Erfindung besteht darin, dass stabilisierte Fettprodukte bereitgestellt werden können, die mehr als 30 Gew.-% und bevorzugt mehr als 50 Gew.-% Fett- oder Ölanteil enthalten, bezogen auf das Trockengewicht.

Das erfindungsgemäße Fettprodukt weist eine Basis von Vollei oder Eigelb auf, d.h. der Nichtfettanteil des Produkts besteht im wesentlichen aus Vollei- oder Eigelbbestandteilen. Im Rahmen der vorliegenden Erfindung werden bevorzugt Hühnereier eingesetzt, jedoch können ganz allgemein Eier von Vögeln und insbesondere von Geflügel verwendet werden.

Ei- und Eigelbpulver werden in vielfältiger Weise in der Lebensmittelindustrie eingesetzt, wobei die einzelnen Produkte z.T. enzymatisch oder mikrobiell vorbehandelt werden (Protein-, Phospholipid- und/oder Kohlenhydratabbau) oder den einzelnen Produkten Substanzen (z.B. Salze, Kohlenhydrate, etc.) gezielt zugesetzt werden. Das Fettsäuremuster von Ei- und Eigelbpulver weist nur geringe Gehalte an bioaktiven Fettsäuren auf. Die langkettigen mehrfach ungesättigten Fettsäuren (LCPUFA) sind im Gesamteigelb lediglich mit bis zu circa 5 Gew.-% an dem Gesamtfettsäuremuster beteiligt. Dies ist darauf zurückzuführen, dass die LCPUFA nahezu ausschließlich in Form der Phospholipide im Eigelbpulver vorkommen. Die Triglyceride, die ca. 60 Gew.-% der Eigelbfette ausmachen, können durch gezieltes Futter der Hennen lediglich im Gehalt an mehrfach ungesättigten Fettsäuren mit bis zu 18 Kohlenstoffatomen, nicht jedoch LCPUFA, angereichert werden. Die speziellen Fettsäuren GLA, SDA und CLA sind im Eigelb jeweils lediglich mit maximal bis zu 1 Gew-% an dem Gesamtfettsäuremuster beteiligt und können ebenfalls durch das Futter nur in geringem Umfang im Gehalt erhöht werden.

Die erfindungsgemäßen Fettprodukte umfassen einen Fett- oder Ölanteil, der Triglyceride und/oder Phospholipide von langkettigen mehrfach ungesättigten Fettsäuren mit mindestens 20 Kohlenstoffatomen enthält, wobei der Anteil der langkettigen mehrfach ungesättigten Fettsäuren mit mindestens 20 Kohlenstoffatomen mehr als 5 Gew.-%, insbesondere mehr als 6 Gew.-%, bevorzugt 10 bis 70 Gew.-%, besonders bevorzugt 15 bis 50 Gew.-% und ganz besonders bevorzugt 20 bis 30 Gew.-% der Gesamtfettsäuren beträgt.

Unter dem Begriff Fett- oder Ölanteil wird im Rahmen der vorliegenden Erfindung der sogenannte Gesamt-Fettgehalt (total lipids content) verstanden, unter den alle möglichen Fette oder Lipoide wie Öle, Fette (Triglyceride), Phospholipide, Glykolipide, Sphingolipide, Sterine, fettlösliche Vitamine u.a. subsummiert werden.

Bei den langkettigen mehrfach ungesättigten Fettsäuren handelt es sich um Omega-3 und Omega-6-Fettsäuren mit mindestens 20 Kohlenstoffatomen, bevorzugt 20 oder 22 Kohlenstoffatomen. Diese Fettsäuren weisen bevorzugt 4, 5 oder 6 C-C-Doppelbindungen auf. Die prominentesten Vertreter dieser Fettsäureklasse sind Arachidonsäure (ARA; 20-4ω6); Eicosapentaensäure (EPA; 20-5ω3); Docosahexaensäure (DHA; 22-6ω3) und Docosapentaensäure (DPA, 22-5ω3). Daneben kann der Fett-oder Ölanteil noch weitere Fettsäure-Phospholipide und/oder Fettsäure-Triglyceride enthalten. Bei diesen Fettsäuren handelt es sich um gesättigte oder ein- oder mehrfach ungesättigte Fettsäuren, wie sie dem Fachmann allgemein bekannt sind.

Die erfindungsgemäßen Fettprodukte können außerdem übliche bekannte Zusatzstoffe wie beispielsweise Stabilisatoren, Konservierungsstoffe, Antioxidanten, Geschmacksstoffe und/oder weitere nutritive öllösliche Stoffe (wie z.B. beta-Carotin, Lutein, Lycopin, Coenzym Q10, Astaxanthin, etc) umfassen.

Der Fett- oder Ölanteil der erfindungsgemäßen Fettprodukte liegt bei mehr als 10 Gew.-%, bevorzugt mehr als 30 Gew.-% und besonders bevorzugt mehr als 50 Gew.-%, bezogen auf das Trockengewicht. Bevorzugt liegt der Fett- oder Ölanteil zwischen 50 und 60 Gew.-%.

Das erfindungsgemäße Fettprodukt liegt in fester Form vor. Darunter fallen z.B. Pulver, Granulate, Agglomerate oder auch Gries in unterschiedlichen Korngrößen. Bevorzugt liegt das Fettprodukt in Form von Pulver vor.

Gemäß einer bevorzugten Ausführungsform stammt der Fett- oder Ölanteil, der die langkettigen mehrfach ungesättigten Fettsäuren enthält, aus tierischem Fett, marinen Ölen und Fermentationsölen. Dazu gehören insbesondere Fischöl, Meerestieröl, Seesäugetieröle wie z.B. Seehundöl, Bakterienöle, Algenöle, Pilzöle oder Einzelleröle. Als Fischöl können beispielsweise Makrelenöl, Lachsöl, Thunfischöl, Heringöl oder Sardinenöl eingesetzt werden. Bevorzugt werden Thunfischöl, Fischöl, Einzelleröl oder Seehundöl verwendet. Es können auch Mischungen davon eingesetzt werden. Ferner können synthetische Fette oder Öle, die langkettige mehrfach ungesättigte Fettsäuren enthalten, eingesetzt werden. Pflanzliche Öle hingegen enthalten keine langkettigen mehrfach ungesättigten Fettsäuren mit mindestens 20 Kohlenstoffatomen.

Das erfindungsgemäße Fettprodukt weist ferner bevorzugt einen Kohlenhydratgehalt von maximal 15 Gew.-% auf, noch bevorzugter von maximal 10 Gew.-% und insbesondere von maximal 5 Gew.-%.

Die erfindungsgemäßen Fettprodukte können vorteilhaft bei der Herstellung von Produkten für den Bereich der Humanernährung und auch für den Bereich Tierernährung eingesetzt werden. Im Bereich Humanernährung ist es durch die Verwendung der erfindungsgemäßen Fettpulver möglich, Lebensmittel, Nahrungsergänzungsmittel und Spezialdiäten bereitzustellen, die einen hohen Gehalt an langkettigen mehrfach ungesättigten Fettsäuren mit mindestens 20 Kohlenstoffatomen aufweisen. Teil der Erfindung sind auch Lebensmittel, Nahrungsergänzungsmittel und Spezialdiäten, die das erfindungsgemäße Fettprodukt enthalten.

Im Unterschied zu herkömmlichen Fettpulvern, die häufig auf Basis von modifizierten Stärken, Maltodextrinen und ähnlichem produziert werden, ist es unter Verwendung der erfindungsgemäßen Fettprodukte zudem möglich, kohlenhydratarme, aber mit bioaktiven Fettsäuren angereicherte Lebensmittel herzustellen und damit z. B. den Erfordernissen von Low-Carb-Diäten (wie Atkins-Diät; Agatson-Diät; South-Beach-Diät; Glyx-Diät) zu entsprechen.

Zusätzlich zur Verwendung im Bereich der Humanernährung bei der Herstellung traditioneller und neuartiger Lebensmittel (Functional Food) sowie von Nahrungsergänzungsmitteln und Spezialdiäten, sind die erfindungsgemäßen Fettprodukte auch im Bereich der Tierernährung sowie spezieller Nahrungsergänzungsmittel für Tiere einsetzbar. Diese weitere Verwendung betrifft sowohl feste Fettprodukte auf Vollei-oder Eigelbbasis umfassend einen Fett- oder Ölanteil, der Triglyceride und/oder Phospholipide von langkettigen mehrfach ungesättigten Fettsäuren mit mindestens 20 Kohlenstoffatomen enthält, wie auch feste Fettprodukte auf Vollei- oder Eigelbbasis, umfassend einen Fett- oder Ölanteil, der Triglyceride und/oder Phospholipide von γ-Linolensäure, Stearidonsäure und/oder konjugierter Linolsäure enthält.

Zu dem Bereich der zu Verwendung vorgesehenen Tierernährung werden unter anderem gezählt:
- Tierfutter für Schlachttiere (Schwein, Ferkel, Rind, Kalb, Kaninchen, Hasen, etc.)
- Tierfutter für Haustiere (wie Hund, Katze, etc.)
- Tierfutter für Sportpferde (Spring-, Renn-, Dressurpferde)
- Tierfutter für Rennhunde
- Futter für Aquarienfische
- Futter für Zuchtfische (wie Lachs, Dorsch, Dorade, Meerwolf, etc.)
- Futter für andere Arten der Aquakultur (Garnelen, Krabben, etc.)
- Aufzuchtfutter für Jungfische und Fischfuttertiere (Arternien, Rotiferen, etc.).

In den genannten Anwendungsbereichen der Tierernährung können die erfindungsgemäßen Fettpulver bespielsweise im Dauerfutter, im Aufzuchtfutter von Jungtieren, im Spezialfutter für tragende und säugende Muttertiere, sowie anderen Spezialfuttern eingesetzt werden. Teil der Erfindung sind auch Tierfutter, die das erfindungsgemäße Fettprodukt enthalten.

Zur Herstellung der erfindungsgemäßen Fettprodukte wird der endogene Fettanteil im Vollei oder Eigelb durch einen Fett- oder Ölanteil ersetzt, der Triglyceride und/oder Phospholipide der langkettigen mehrfach ungesättigten Fettsäuren enthält. Genauer gesagt wird das im Eigelb mit einem Anteil von ca. 35 bis 40 Gew.-% der Trockenmasse vorhandene Eieröl (Triglycerid) plus Cholesterin weitestgehend entfernt und durch solche Fette oder Öle ersetzt, die die gewünschte Zusammensetzung und den gewünschten Gehalt an bioaktiven, langkettigen mehrfach ungesättigten Fettsäuren aufweisen. Wie vorstehend angegeben handelt es sich bevorzugt um tierisches Fett, marine Öle, Fermentationsöle, spezielle Pflanzenöle und/oder Mischungen davon.

Bei der Herstellung der festen Fettprodukte, insbesondere der Fettpulver, wird üblicherweise bevorzugt entweder von flüssigem oder von sprühgetrocknetem Eigelb ausgegangen. Im Falle des flüssigen Eigelbs kann das endogen vorhandene Eieröl durch zentrifugale Trenntechniken (u.U. nach Brechung der Emulsion) entfernt werden. Dem flüssigen, entölten Eigelb wird das gewünschte Fett oder Öl bzw. die Fett-oder Ölmischungen zugesetzt, wobei diese üblicherweise durch geeignete Antioxidantien (beispielsweise Vitamin E, Ascorbylpalmitat, Rosmarinextrakte, Extrakte aus grünen Tee, oder andere) stabilisiert sind. Das homogene Gemisch der beiden Komponenten kann dann durch dem Fachmann bekannte geeignete Verfahren getrocknet werden, z.B. mittels einer Sprühtrocknung oder einer Gefriertrocknung, wobei die Korngröße und die Fließeigenschaften gegebenenfalls durch weitere Verfahrensschritte wie z.B. Agglomeration oder Vermahlung gezielt eingestellt werden können, was dem Fachmann allgemein bekannt ist. Das feste Fettprodukt liegt bevorzugt in Pulverform vor, jedoch können beispielsweise auch Produkte in Granulatform oder Griesform durch geeignete Verarbeitungsmethoden erhalten werden.

Im Falle des sprühgetrockneten Eigelbs kann das endogen vorhandene Eieröl in einem ein- oder mehrstufigen Prozess entfernt und durch das Öl oder Fett ersetzt werden. Solche Verfahren sind dem Fachmann bekannt und umfassen neben der Extraktion mit überkritischen Gasen (z. B. CO₂-Hochdruckextraktion) auch beispielsweise ein Pressverfahren, bei dem das Behandlungsmittel auf Ölbasis unter Druck durch das trockene Eiprodukt hindurchgepresst wird. Anschließende Trocknungsverfahren sind üblicherweise bei dieser Vorgehensweise nicht erforderlich, können aber gegebenenfalls durchgeführt werden. Zur gezielten Einstellung von Korngröße und Fließeigenschaften gilt das oben gesagte.

### BEISPIELE

Im Folgenden wird die Erfindung anhand von Beispielen näher erläutert. Die Gesamtfettsäurezusammensetzungen der Fettprodukte aus den Beispielen sind in der Tabelle wiedergegeben.

### Beispiel 1

Fettpulver mit hohem Gehalt an Eisosapentaensäure (EPA) und Docosahexaensäure (DHA) ausgehend von Seehund-Öl (seal oil)

Die Herstellung des Fettprodukts auf Eigelbbasis erfolgte durch Abtrennung des Eieröls aus dem flüssigen Eigelb durch ein zentrifugales Trennverfahren. Dem entölten Eigelb wurde sodann im Verhältnis 2 : 1 (v/v) Seehundöl zugegeben, das Produkt homogenisiert und anschließend per Gefriertrocknung getrocknet.

Das erhaltene Produkt weist einen Fettanteil von mehr als 50 Gew.-% der Trockenmasse aus, der sich zu etwa 35 Gew.-% aus Phospholipiden und zu etwa 65 Gew.-% aus Triglyceriden zusammensetzt. Der Proteinanteil beträgt ca. 40 Gew.-% der Trockenmasse. Aufgrund der Verwendung von Seehund-Öl beträgt der Anteil an EPA ca. 5,2 Gew.-%, an DPA ca. 3,0 Gew.-% und an DHA ca. 7,2 Gew.-% der Gesamtfettsäuren.

### Beispiel 2

Fettpulver mit hohem Gehalt an Docosahexaensäure auf Basis von Thunfischöl Die Herstellung des Fettprodukts auf Eigelbbasis erfolgte durch Abtrennung des Eieröls aus dem flüssigen Eigelb durch ein zentrifugales Trennverfahren. Dem entölten Eigelb wurde sodann im Verhältnis 2 : 1 (v/v) Thunfischöl zugegeben, das Produkt homogenisiert und anschließend per Gefriertrocknung getrocknet.

Das erhaltene Produkt weist einen Fettanteil von mehr als 50 Gew.-% der Trockenmasse aus, der sich zu etwa 35 Gew.-% aus Phospholipiden und zu etwa 65 Gew.-% aus Triglyceriden zusammensetzt. Der Proteinanteil beträgt ca. 40 Gew.-% der Trockenmasse. Aufgrund der Verwendung von Thunfischöl beträgt der Anteil an EPA ca. 4,3 Gew.-% und DHA ca. 20,3 Gew.-% der Gesamtfettsäuren.

### Beispiel 3

Fettpulver mit hohem Gehalt an Eisosapentaen- und Docosahexaensäure auf Basis von Fischöl

Die Herstellung des Fettprodukts auf Eigelbbasis erfolgte wie für Beispiel 2 beschrieben, wobei jedoch anstelle des Thunfischöles ein EPA-reiches Fischöl südamerikanischen Ursprungs (Anchovy, Makrele) eingesetzt wurde.

Das erhaltene Produkt weist einen Fettanteil von mehr als 50 Gew.-% der Trockenmasse aus, der sich zu etwa 35 Gew.-% aus Phospholipiden und zu etwa 65 Gew.-% aus Triglyceriden zusammensetzt. Der Proteinanteil beträgt ca. 40 Gew.-% der Trockenmasse. Aufgrund der Verwendung eines Fischöles beträgt der Anteil an EPA ca. 13,7 Gew.-% und DHA ca. 10 Gew.-% der Gesamtfettsäuren.

### Beispiel 4

Fettpulver mit hohem Gehalt an Docosahexaensäure auf Basis von Einzelleröl

Die Herstellung des Fettprodukts auf Eigelbbasis erfolgte wie für Beispiel 1 beschrieben, wobei jedoch anstelle des Seehundöles ein DHA-reiches Einzelleröl (Mikroalgen) eingesetzt wurde.

Das erhaltene Produkt weist einen Fettanteil von mehr als 50 Gew.-% der Trockenmasse aus, der sich zu etwa 35 Gew.-% aus Phospholipiden und zu etwa 65 Gew.-% aus Triglyceriden zusammensetzt. Der Proteinanteil beträgt ca. 40 Gew.-% der Trockenmasse. Aufgrund der Verwendung eines mikrobiellen Öles beträgt der Anteil an DPA ca. 12 Gew.-% und der Anteil an DHA ca. 30 Gew.-% der Gesamtfettsäuren.

**Tabelle 1**

| Zusammensetzung der Fettpulver aus den Beispielen | | | | |
|---|---|---|---|---|
| Parameter | Bsp. 1 | Bsp. 2 | Bsp. 3 | Bsp. 4 |
| | Seehundöl-Pulver | Thunfischöl-Pulver | Fischöl-Pulver | Einzelleröl-Pulver |
| | | | | |
| Fettsäuren | | | | |
| | | | | |
| 14-0 | 3,2 | 2,6 | 5,1 | 5,7 |
| 16-0 | 12,8 | 21,5 | 19,5 | 24,3 |
| 18-0 | 4,8 | 8,0 | 6,5 | 4,6 |
| 18-1 | 25,1 | 16,4 | 15,8 | 7,1 |
| 18-2ω6 | 6,1 | 6,3 | 6,0 | 5,2 |
| 18-3ω3 | 0,5 | 0,7 | 0,7 | 0,3 |
| 18-3ω6 | 0,1 | 0,2 | | |
| 20-4ω6 | 1,9 | 3,0 | 1,6 | 2,3 |
| 20-5ω3 | 5,2 | 4,3 | 13,7 | 1,8 |
| 22-5ω6 | | | | 11,9 |
| 22-5ω3 | 3,0 | 0,9 | 0,1 | 0,1 |
| 22-6ω3 | 7,2 | 20,3 | 10,1 | 29,9 |
| Total CLA | | | | |

### Beispiel 5

Nachfolgend wird ein efindungsgemäßes Fettpulverprodukt für den Bereich Tierfutter beispielhaft dargestellt. Die Produktzusammensetzung ist in der Tabelle 2 wiedergegeben.

Die Herstellung dieses Eicosapentaensäure (EPA) und Docosahexaensäure (DHA) - reichen Fettpulvers erfolgte durch den physikalischen Austausch des endogen vorhandenen Eieröls gegen ein EPA/DHA-reiches Fischöl mittels Pressverfahren und anschließender Vermahlung. Das erhaltene Produkt weist einen Fettanteil von mehr als 60 Gew.-% der Trockenmasse auf, wovon mindestens 10% der Trockenmasse in Form von Phospholipiden vorliegen. Der Proteinanteil beträgt mindestens 30% der Trockenmasse. Durch die Art des verwendeten Fischöls ergibt sich ein Gehalt an EPA von ca. 3% und an DHA von ca. 5% der Trockenmasse (entspricht einem Anteil von ca. 6 % EPA und 8 % DHA an den Gesamtfettsäuren).

**Tabelle 2**

| Omega-3-reiches Fettpulver für den Tierfutterbereich (Jungtier-Aufzucht) | | |
|---|---|---|
| Zusammensetzung: | Fischöl | |
| | Pflanzliches Öl | |
| | Eigelb | |
| | | |
| Analytische Daten: | Gesamtfett | > 60 % DM |
| | Protein | > 30 % DM |
| | Lecithin | > 10 % DM |
| | Kohlenhydrate | < 5 % DM |
| | Restfeuchte | < 5 % DM |
| | Cholesterin | < 1 % DM |
| | | |
| Fettsäuregehalt: | EPA (20-5w3) | ca. 3 % DM |
| | DHA (22-6w3) | ca. 5 % DM |
| | Gesamt-Omega-3 Gehalt | ca. 10 % DM |
| | | |
| Physikochem. Parameter: | Farbe | gelblich |
| | Löslichkeit | wasserlöslich |
| | Geschmack | typisch |

## Patentansprüche

1. Festes Fettprodukt auf Vollei- oder Eigelbbasis, mit einem Fett- oder Ölanteil,
**dadurch gekennzeichnet, dass**
- der Fett- oder Ölanteil aus dem Eigelb stammende Phospholipide enthält, und dass
- im Fett- oder Ölanteil langkettige mehrfach ungesättigte Fettsäuren mit mindestens 20 Kohlenstoffatomen in einer Menge von mehr als 5 Gew.-% des Gesamtfettsäuregehaltes vorliegen.

2. Festes Fettprodukt nach Anspruch 1,
**dadurch gekennzeichnet, dass** das feste Fettprodukt in Pulverform vorliegt.

3. Festes Fettprodukt nach Anspruch 1 oder 2,
**dadurch gekennzeichnet, dass** es sich bei den langkettigen mehrfach ungesättigten Fettsäuren um Arachidonsäure, Eicosapentaensäure, Docosahexaensäure, Docosapentaensäure oder Mischungen davon handelt.

4. Festes Fettprodukt nach einem der vorhergehenden Ansprüche,
**dadurch gekennzeichnet, dass** es zusätzlich weitere Fettsäure-Phospholipide, Fettsäure-Triglyceride und/oder Antioxidantien enthält.

5. Festes Fettprodukt nach einem der vorhergehenden Ansprüche,
**dadurch gekennzeichnet, dass** das feste Fettprodukt einen Kohlenhydratanteil von maximal 15 Gew.-%, vorzugsweise maximal 5 Gew.-%, bezogen auf das Trockengewicht des festen Fettproduktes, aufweist.

6. Festes Fettprodukt nach einem der vorhergehenden Ansprüche,
**dadurch gekennzeichnet, dass** das feste Fettprodukt einen Fett- oder Ölanteil von mehr als 30 Gew.-%, bezogen auf das Trockengewicht des festen Fettproduktes, aufweist.

7. Festes Fettprodukt nach einem der vorhergehenden Ansprüche,
**dadurch gekennzeichnet, dass** der Fett- oder Ölanteil zumindest teilweise von einem tierischen Fett, Fischöl, Meerestieröl, Fermentationsöl, Einzelleröl oder Mischungen davon abstammt.

8. Verfahren zur Herstellung eines festen Fettproduktes nach einem der vorhergehenden Ansprüche,
**dadurch gekennzeichnet, dass** das Eieröl aus dem Vollei oder Eigelb abgetrennt und durch einen Fett- oder Ölanteil ersetzt wird, der Triglyceride und/oder Phospholipide von langkettigen mehrfach ungesättigten Fettsäuren mit mindestens 20 Kohlenstoffatomen enthält, wobei der Anteil der langkettigen mehrfach ungesättigten Fettsäuren mit mindestens 20 Kohlenstoffatomen mehr als 5 Gew.-% des Gesamtfettsäuregehaltes beträgt.

## Claims

1. A solid fat product based on whole egg or egg yolk, having a fat or oil component,
**characterized in that**
- the fat or oil component contains phospholipids originating from the egg yolk, and **in that**
- long-chain polyunsaturated fatty acids having at least 20 carbon atoms are present in the fat or oil component in an amount of more than 5 wt.% of the total fatty acid content.

2. The solid fat product according to Claim 1, **characterized in that** the solid fat product is in powder form.

3. The solid fat product according to Claim 1 or 2,
**characterized in that** the long-chain polyunsaturated fatty acids are arachidonic acid, eicosapentaenoic acid, docosa-hexaenoic acid, docosapentaenoic acid or mixtures thereof.

4. The solid fat product according to one of the preceding claims,
**characterized in that** it additionally contains other fatty acid phospholipids, fatty acid triglycerides and/or antioxidants.

5. The solid fat product according to one of the preceding claims,
**characterized in that** the solid fat product has a carbohydrate content of at most 15 wt.%, preferably of at most 5 wt.%, based on the dry weight of the solid fat product.

6. The solid fat product according to one of the preceding claims,
**characterized in that** the solid fat product has a fat or oil content of more than 30 wt.%, based on the dry weight of the solid fat product.

7. The solid fat product according to one of the preceding claims,
**characterized in that** at least part of the fat or oil component originates from an animal fat, fish oil, marine animal oil, fermentation oil, single-cell oil or mixtures thereof.

8. A process for the preparation of a solid fat product according to one of the preceding claims,
**characterized in that** the egg oil is separated from the whole egg or egg yolk and is replaced with a fat or oil component containing triglycerides and/or phospholipids of long-chain polyunsaturated fatty acids having at least 20 carbon atoms, the proportion of long-chain polyunsaturated fatty acids having at least 20 carbon atoms amounting to more than 5 wt.% of the total fatty acid content.

## Revendications

1. Produit gras solide à base d'oeuf entier ou de jaune d'oeuf, comprenant une proportion de graisse ou d'huile,
**caractérisé en ce que**
- la proportion de graisse ou d'huile contient des phospholipides provenant du jaune d'oeuf, et que
- la proportion de graisse ou d'huile contient des acides gras polyinsaturés à chaîne longue comportant au moins 20 atomes de carbone dans une quantité supérieure à 5 % en poids de la teneur totale en acide gras.

2. Produit gras solide selon la revendication 1,
**caractérisé en ce que** le produit gras solide se présente sous forme de poudre.

3. Produit gras solide selon la revendication 1 ou 2,
**caractérisé en ce qu'**il s'agit pour les acides gras polyinsaturés à chaîne longue d'acides arachidoniques, d'acides éicosapentaénoïques, d'acides docosahexaénoïques, d'acides docosapentaénoïques ou de mélanges de ceux-ci.

4. Produit gras solide selon l'une des revendications précédentes,
**caractérisé en ce qu'**il comprend en outre d'autres phospholipides et triglycérides d'acides gras et/ou d'autres antioxydants.

5. Produit gras solide selon l'une des revendications précédentes,
**caractérisé en ce que** le produit gras solide présente une proportion d'hydrates de carbone s'élevant à 15 % en poids maximum, de préférence à 5 % en poids maximum, par rapport au poids sec du produit gras solide.

6. Produit gras solide selon l'une des revendications précédentes,
**caractérisé en ce que** le produit gras solide présente une proportion de graisse ou d'huile supérieure à 30 % en poids par rapport au poids sec du produit gras solide.

7. Produit gras solide selon l'une des revendications précédentes,
**caractérisé en ce que** la proportion de graisse ou d'huile provient au moins pour partie d'une graisse animale, d'une huile de poisson, d'une huile d'animal marin, d'une huile de fermentation, d'une huile de protiste ou de mélanges de ceux-ci.

8. Procédé servant à la fabrication d'un produit gras solide selon l'une des revendications précédentes,
**caractérisé en ce que** l'huile d'oeuf est séparée de l'oeuf entier ou du jaune d'oeuf et remplacée par une proportion de graisse ou d'huile contenant des triglycérides et/ou des phospholipides d'acides gras polyinsaturés à chaîne longue comportant au moins 20 atomes de carbone, la proportion d'acides gras polyinsaturés à chaîne longue comportant au moins 20 atomes de carbone s'élevant à plus de 5 % en poids de la teneur totale en acides gras.
